Europäisches Patentamt

(19) European Patent Office

Office européen des brevets

(11) Publication number: **0 112 194**

**A1**

(12) **EUROPEAN PATENT APPLICATION**

(21) Application number: **83402088.5**

(22) Date of filing: **26.10.83**

(51) Int. Cl.³: **B 60 T 17/22**

(30) Priority: **01.11.82 US 438091**

(43) Date of publication of application:
**27.06.84 Bulletin 84/26**

(84) Designated Contracting States:
**DE FR GB IT**

(71) Applicant: **THE BENDIX CORPORATION**
**Executive Offices Bendix Center**
**Southfield Michigan 48037(US)**

(72) Inventor: **Grabill, Paul J.**
**54739 Winding Brook Drive**
**Mishawaka Indiana 46545(US)**

(74) Representative: **Brullé, Jean et al,**
**Service Brevets Bendix 44, rue François 1er**
**F-75008 Paris(FR)**

(54) **A warning device for a vehicle brake system.**

㊗ A warning device for a vehicle brake system wherein a master cylinder 10 communicates fluid pressure to a pair of brake circuits (38, 40). A pair of fittings (50-52) attach the warning device body (54) to the master cylinder housing (12) and also provide fluid communication to the pair of brake circuits (38, 40) and to a pressure responsive member (58) of the warning device.

EP 0 112 194 A1

A WARNING DEVICE FOR A VEHICLE BRAKE SYSTEM

This invention relates to a warning device for a vehicle brake system wherein a signal is generated in response to a pressure differential between a pair of brake circuits.

With dual hydraulic master cylinders, a pair of pressure chambers is provided to independently communicate fluid pressure to separate brake circuits. It is desirable to provide substantially equal fluid pressures for each brake circuit so that the vehicle will remain stable during braking. If a pressure differential between the brake circuits is generated during braking, it is possible for the vehicle to swerve dangerously from the direction of travel. Therefore, if a pressure differential is generated, it would be helpful to a vehicle operator if a warning signal would indicate when this condition existed.

In United States Patent 3,665,389 (Winston et al) issued May 23, 1972, a warning device is provided to generate a signal when one of the brake circuits fails. The device is carried within a switch body adjacent the master cylinder.

The present invention provides a warning device for a vehicle brake system having a pair of brake circuits receiving fluid pressure from a master cylinder, the warning device including a body fluidly communicating with the pair of brake circuits, a pressure responsive assembly carried by the body and exposed to the pair of brake circuits, and means adapted for connecting the body with the master cylinder whereby the pressure responsive assembly is movable in response to a pressure differential between the pair of brake circuits to provide a warning for the pressure differential condition.

The present invention is characterized in that said means for connecting the body to the master cylinder is provided with passages to provide for the fluid communication between said pressure responsive assembly and said pair of brake circuits.

It is an advantage of the present invention that the warning device body is connected to the master cylinder housing simultaneously with the provision of fluid communication from the master cylinder to the pair of brake circuits via the pair of fittings. Also, the pair of fittings performs three functions comprising: attaching the body to the housing; communicating the master cylinder with the pair of brake circuits; and communicating the pair of brake circuits with the pressure responsive assembly.

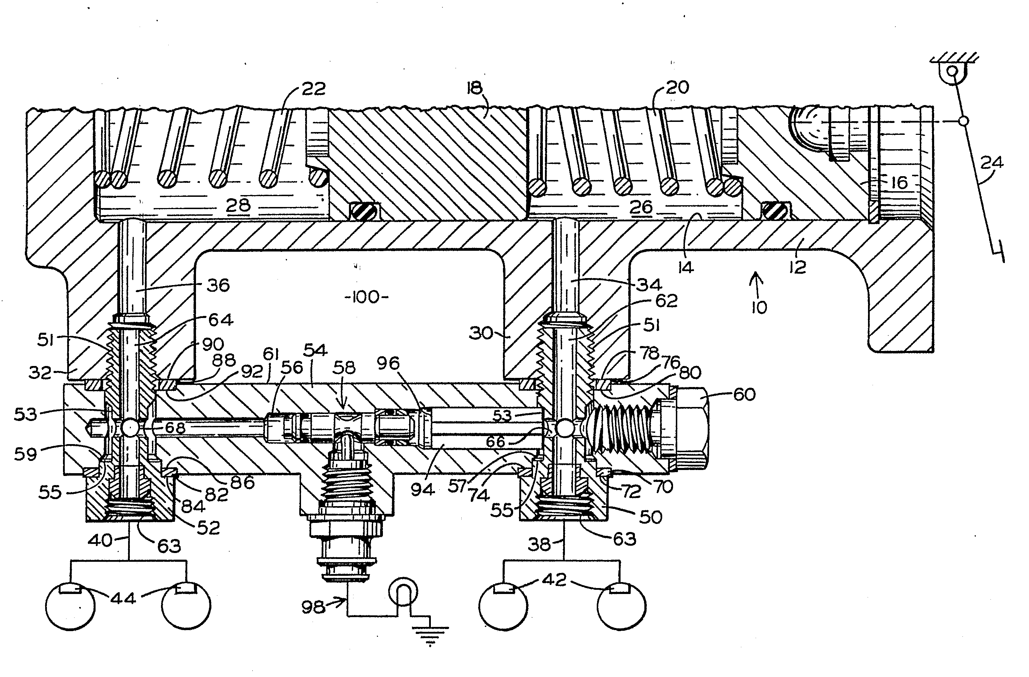

The invention will now be described with reference to the accompanying drawing, which illustrates merely one embodiment for carrying out the invention herein.

The sole Figure shows a partial cross-sectional view of a master cylinder with a warning device coupled thereto in accordance with the invention.

A master cylinder 10 of conventional construction includes a housing 12 with a bore 14 movably receiving a pair of pistons 16 and 18 spring loaded to a rest position shown via return springs 20 and 22. A brake pedal 24 is operable during braking to move the pair of pistons within the bore in order to generate fluid pressure within a pair of pressure chambers 26 and 28.

The housing 12 forms a pair of transversely extending bosses 30 and 32 with outlet ports 34 and 36 disposed therein and leading from the pressure chambers 26 and 28, respectively. The outlet ports communicate with respective brake circuits 38 and 40 in a manner hereinafter described so that the fluid pressure generated in the pair of pressure chambers is communicateu to brakes 42 and 44.

In accordance with the invention, a pair of fittings 50 and 52 are threadably coupled to the bosses 30 and 32 in order to attach a body 54 thereto, which body 54 and its associated parts define the warning device. The body 54 includes a bore 56 movably receiving a pressure responsive assembly 58 and a plug 60 closes an open end of the bore 56. The pair of fittings 50 and 52 includes longitudinally extending passages 62 and 64 fluidly communicating the ports 34 and 36 with the circuits 38 and 40 and transversely extending passages 66 and 68 intersecting the passages 62 and 64, respectively, and fluidly communicating the bore 56 with the brake circuits 38 and 40. The brake circuit 38 is open to one side of the pressure responsive assembly 58 while the brake circuit 40 is open to the other side of the pressure responsive assembly 58. When the fitting 50 is tightly secured to the boss 30, a sealing ring 70 abuts a shoulder 72 on fitting 50 and a shoulder 74 on body 54, while a sealing ring 76 abuts the end face 78 of boss 30 and a shoulder 80 on body 54 opposite shoulder 74. Similarly, when the fitting 52 is tightly secured to the boss 32, a sealing ring 82 abuts a shoulder 84 on fitting 52 and a shoulder 86 on body 54, while a sealing ring 88 abuts the end face 90 of boss 32 and a shoulder 92 on body 54 opposite shoulder 86.

Each of the pairs of fittings 50 and 52 is provided with external threads 51 secured to the wall of ports 34 and 36. A reduced diameter section 53 extends across the bore 56 and the passages 66 and 68 intersect the reduced diameter section 53. A shoulder 55 on each fitting opposes tapered shoulders 57 and 59 on the body 54 to limit the loading for the sealing rings 70 and 82 while the outer surface 61 of the body 54 is slightly spaced from the boss faces 78 and 90 to also limit the loading for the sealing rings 76 and 88. Internal threads 63 are formed on each fitting outside the body 54 so that the brake circuits 38 and 40 are readily connected to the fittings 50 and 52, respectively.

The pressure responsive assembly 58 is well known in the art so that further explanation is not necessary herein. Reference is made to United States Patent 3,480,333 issued to W. Stelzer November 25, 1969 for a thorough description of such a pressure responsive assembly. In order to dispose and retain the pressure responsive assembly within the body bore 56, the bore is stepped so that a spacer 94 opposes one and of the pressure responsive assembly 58 and the fitting 50 is engageable with the spacer 94 to fix the spacer within the bore 56 between a shoulder 96 and the fitting 50. A switch and light circuit 98 is connected to the pressure responsive assembly in order to generate a signal when the assembly 58 is in an actuated position.

With the body 54 secured to the bosses 30 and 32, the body 54 forms a spacing 100 with the housing 12. The spacing renders the body 54 easily accessible for removal and/or installation relative to the master cylinder housing.

In view of the foregoing description, it is seen that the warning device is readily adapted for easy attachment with a master cylinder housing at the same time fluid communication is established to a pair of brake circuits.

0112194

# C L A I M S

1. A warning device for a vehicle brake system having a pair of brake circuits (38, 40) receiving fluid pressure from a master cylinder (10), the warning device including a body (54) fluidly communicating with the pair of brake circuits (38, 40), a pressure responsive assembly (58) carried by the body (54) and exposed to the pair of brake circuits (38, 40), and means (50, 52) adapted for connecting the body (54) with the master cylinder (10), whereby the pressure responsive assembly (58) is movable in response to a pressure differential between the pair of brake circuits (38, 40) to provide a warning for the pressure differential condition, characterized in that said means (50, 52) for connecting the body (54) to the master cylinder (10) is provided with passages (62, 66 and 64, 68) to provide for the fluid communication between said pressure responsive assembly (58) and said pair of brake circuits (38, 40).

2. The warning device of claim 1 in which said connecting means comprises a pair of fittings (50, 52) threadably coupled to said master cylinder and extending through said body (54).

3. The warning device of claim 2 in which each of said fittings (50, 52) includes a longitudinally extending bore (62, 64) leading from the master cylinder to a respective brake circuit, and a transversely extending bore (66, 68) intersecting said longitudinally extending bore (62, 64) and leading to said pressure responsive member (58).

4. The warning device of claim 1 in which said connecting means cooperates with said body to form abutments (53) limiting movement of said pressure responsive member within said body.

5. The warning device of claim 1 in which said connecting means cooperates with said body (54) to carry a first sealing (70) assembly therebetween, said body (54) is adapted to carry a second sealing ring (76) assembly engageable with said master cylinder, and said connecting means is secured to said master cylinder (10).

6.  The warning device of claim 1 in which said master cylinder (10) includes a pair of transversely extending bosses (30, 32) defining outlet ports (34, 36) communicating with said pair of brake circuits (38, 40), respectively, and said body (54) is connected to said master cylinder at said pair of bosses (30, 32).

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 433 374 (GIRLING)<br><br>* Entire document *<br><br>----- | 1-3,5, 6 | B 60 T 17/22 |

**TECHNICAL FIELDS SEARCHED (Int. Cl. ³)**

B 60 T 17/00

The present search report has been drawn up for all claims

| Place of search | Date of completion of the search | Examiner |
|---|---|---|
| BERLIN | 30-01-1984 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82